# EUROPÄISCHE PATENTSCHRIFT

(11) **EP 0 503 158 B1**
(45) Veröffentlichungstag und Bekanntmachung des Hinweises auf die Patenterteilung: **06.07.1994**
(21) Anmeldenummer: 91122199.2
(22) Anmeldetag: 23.12.1991
(51) Int. Cl.: B64C 9/18

(54) **Antriebs- und Führungsvorrichtung für eine an einem Flugzeugtragflügel angeordnete Klappe**
Guiding and driving device for a flap connected to a wing
Système d'entraînement et de guide pour un volet d'aile d'avion

(30) Priorität: 08.03.1991 DE 4107556
(43) Veröffentlichungstag der Anmeldung: 16.09.1992
(73) Patentinhaber: Daimler-Benz Aerospace Airbus Gesellschaft mit beschränkter Haftung, 21129 Hamburg (DE)
(72) Erfinder: Gartelmann, Rainer, W-2800 Bremen 61 (DE); Seifert, Manfred, W-2820 Bremen-Grohn (DE)
(74) Vertreter: Hansmann, Dierk, Dipl.-Ing.

(56) Entgegenhaltungen:
- EP-A- 0 205 939
- DE-A- 3 133 961

## Beschreibung

Die Erfindung betrifft eine Antriebs- und Führungsvorrichtung für eine an einem Flugzeugtragflügel angeordnete Klappe, insbesondere für eine Hinterkantenklappe, bestehend aus einer kombinierten Trag- und Führungsschiene für einen auf dieser verfahrbaren Wagen, an dem die Klappe beweglich gehaltert ist, einem auf einen Antriebshebel wirkenden Stellantrieb.

Eine derartige Schienenkinematik zum Ein- und Ausfahren von Hinterkantenklappensystemen an Flugzeugtragflügeln, die bei Start und Landung als Hochauftriebshilfen dienen, ist aus der US-A-43 81 093 bekannt geworden. Aufgrund der unterschiedlichen aerodynamischen Anforderungen beim Start und bei der Landung - maximaler Auftrieb bei möglichst geringem Widerstand einerseits und maximaler Auftrieb mit möglichst hohem Widerstand andererseit- müssen Schienenkinematiken dieser Art so ausgelegt sein, daß sich mit ihnen die entsprechenden Klappenstellungen realisieren lassen. Daraus ergibt sich häufig das Problem einer relativ großen Bauhöhe und Baulänge solcher Schienenkinematiken. Die Verkleidungen, die diese Anordnungen im Reiseflugbetrieb vollständig umschließen, müssen daher zwangsläufig recht umfangreich sein und können so die Aerodynamik des Tragflügels nachteilig beeinflussen.

Aufgabe der Erfindung ist es, eine Vorrichtung der eingangs genannten Art so auszubilden, daß sie möglichst geringe Abmessungen aufweist und so zu einer nachhaltigen Verbesserung der aerodynamischen Eigenschaften des Tragflügels führt.

Die Erfindung löst diese Aufgabe durch eine Antriebs- und Führungsvorrichtung mit den kennzeichnenden Merkmalen des Patentanspruchs 1.

Die erfindungsgemäße Vorrichtung besitzt dabei zugleich eine Reihe weiterer Vorteile. So werden alle Klemmfälle, die bei einer aus einem Wagen sowie einer Trag- und Führungsschiene bestehenden Schienenkinematik berücksichtigt werden müssen, nicht, wie bei anderen Systemen, über die Landeklappe geführt, sondern sie bleiben innerhalb der eigentlichen Antriebskinematik. Da somit die Klemmlasten nicht mehr über die Landeklappe laufen, kann diese, ebenso wie die zugehörige Lagerung, optimal ausgelegt werden, was zu weiteren erheblichen Gewichts- sowie Kosteneinsparungen führt. Die beiden erfindungsgemäß am Antriebshebel angreifenden Stangen, die Antriebsstange und die Steuerstange, werden dabei in entgegengesetzter Normalspannungsrichtung beaufschlagt, während die Antriebsstange des Wagens druckbelastet wird, unterliegt die Steuerstange einer zugbeanspruchung. Daraus resultiert ein internes Kräftepaar, das nicht auf den Stellantrieb rückwirkt; Vibrationen im Klappenkörper können folglich nicht auf den Stellantrieb übertragen werden und dieses beschädigen.

Da zudem sowohl der Antriebshebel als auch die beiden an diesem angreifenden Stangen über den gesamten Ausfahrweg der Klappe keinen Totpunkt durchlaufen, kann auf zusätzliche Sicherungsmaßnahmen, wie Überlastschalter und/oder eine konstruktiv vorgesehene Sollbruchstelle, von vornherein verzichtet werden. Die erfindungsgemäß vorgesehene Ausbildung der Antriebs- und Führungsvorrichtung ermöglicht es weiterhin, das als Stellantrieb vorgesehene planetengetriebe etwa in der Mitte des Flügelhinterholmes zu plazieren und es so außerhalb des Deformationsbereichs der Führungsmaschinen anzuordnen. Dadurch entfallen zugleich die sonst erforderlichen Umlenkungen für die zu den Stellantrieben führenden Antriebswellen. Letztere können vielmehr geradlinig am Flügelhinterholm installiert werden.

Die in den übrigen Ansprüchen angegebenen vorteilhaften Weiterbildungen der erfindungsgemäßen Vorrichtung betreffen in erster Linie Maßnahmen zur weiteren Verbesserung der aerodynamischen Eigenschaften sowie der Funktionssicherheit dieser Vorrichtung.

In der Zeichnung ist ein Ausführugsbeispiel der Erfindung schematisch dargestellt. Es zeigen:
- Fig. 1: eine Antriebs- und Führungsvorrichtung für eine Landeklappe in schematischer Darstellung,
- Fig. 2 bis 4: die in Fig. 1 gezeigte Anordnung in drei unterschiedlichen Ausfahrpositionen,
- Fig. 5: eine Trag- und Führungsmaschine in perspektivischer Darstellung,
- Fig. 6: einen Querschnitt durch die in Fig. 5 gezeigte Anordnung,
- Fig. 7: einen auf die Anordnung gemäß Fig. 5 abgestimmten Wagen,
- Fig. 8: ein Detail zur Führung des Wagens gemäß Fig. 7 und
- Fig. 9: einen am Wagen gemäß Fig. 7 gehalterten zweiarmigen Hebel.

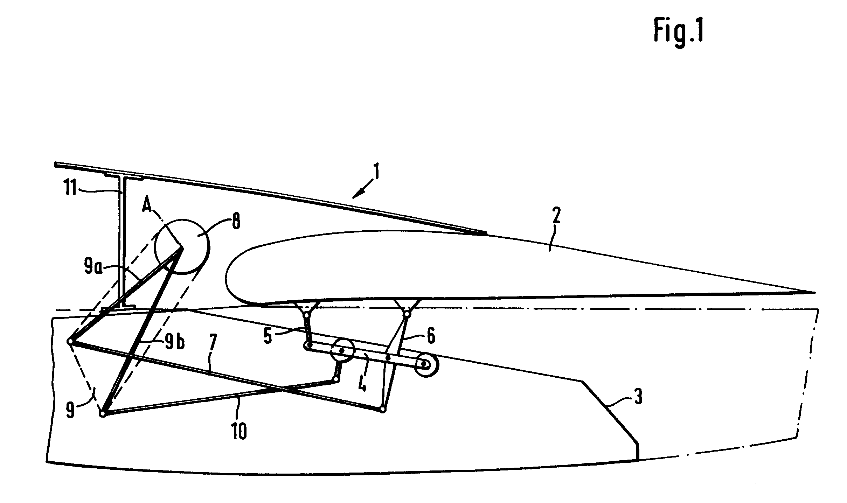

Bei der in Fig. 1 gezeigten Anordnung handelt es sich um einen Schnitt durch den Hinterkantenbereich eines Tragflügels 1 für ein Verkehrs- und Transportflugzeug, an dem eine Hinterkanten- oder Landeklappe 2 angeordnet ist. Letzterer ist, um eine Verfahrbarkeit in die in den unterschiedlichen Phasen des Flugzeuges erforderlichen Positionen zu gewährleisten, ein Antriebs- und Führungssystem zugeordnet, daß sich im einzelnen aus den nachfolgenden Komponenten zusammensetzt, die jeweils in der Nähe jedes der seitlichen Endbereiche der Klappe angeordnet sind:

Eine kombinierte Trag- und Führungsschiene 3 dient zur Aufnahme eines Wagens 4, an dem über zwei Lenkerelemente 5 und 6 die Klappe 2 gelenkig gehaltert ist. Dabei ist im Fall des hier dargestellten Ausführungsbeispiels das in Flugzeuglängsrichtung gesehen hintere Lenkerelement 6 als zweiarmiger Hebel ausgebildet, der am Wagen 4 drehbar gehaltert ist. Wie aus der Figur ersichtlich ist, bilden das Lenkerelement 5 und der der Klappe 2 zugeordnete Arm des zweiarmigen Hebels 6 zusammen mit den zwischen den jeweiligen Anlenkpunkten befindlichen Bereichen der Klappe 2 und des Wagens 4 ein Viergelenk.

Der zweite Arm des Hebels 6 ist über eine Steuerstange 7 mit einem von einem Stellantrieb 8 beaufschlagten und mit diesem fest verbundenen Antriebshebel 9 gekoppelt. Mit diesem Antriebshebel 9 ist weiterhin über eine Antriebsstange 10 auch der Wagen 4 gekoppelt. Wie aus Fig. 1 ersichtlich ist, liegt dabei der Anlenkpunkt der Steuerstange 7 im Fall des hier gezeigten Ausführungsbeispiels näher an der Drehachse A des Stellantriebes 8 als der entsprechende Anlenkpunkt der Antriebsstange 10, zugleich eilt er diesem gegenüber um einen gewissen Drehwinkelbetrag im Uhrzeigersinn vor. Die äußere Gestalt des Antriebshebels 9 ist dabei unerheblich und deshalb in der Figur nur gestrichelt angedeutet, er kann beispielsweise auch durch zwei unterschiedlich lange und um den entsprechenden Drehwinkel versetzt gegeneinander angeordnete separate Antriebshebel 9a und 9b ersetzt werden. Der Stellantrieb 8, bei dem es sich im Fall des hier beschriebenen Ausführungsbeispiels um ein Planetengetriebe handelt, ist über ein in der Figur nicht dargestellte Halterung unmittelbar an der Flügelstruktur, in diesem Fall am Hinterholm 11, angeordnet.

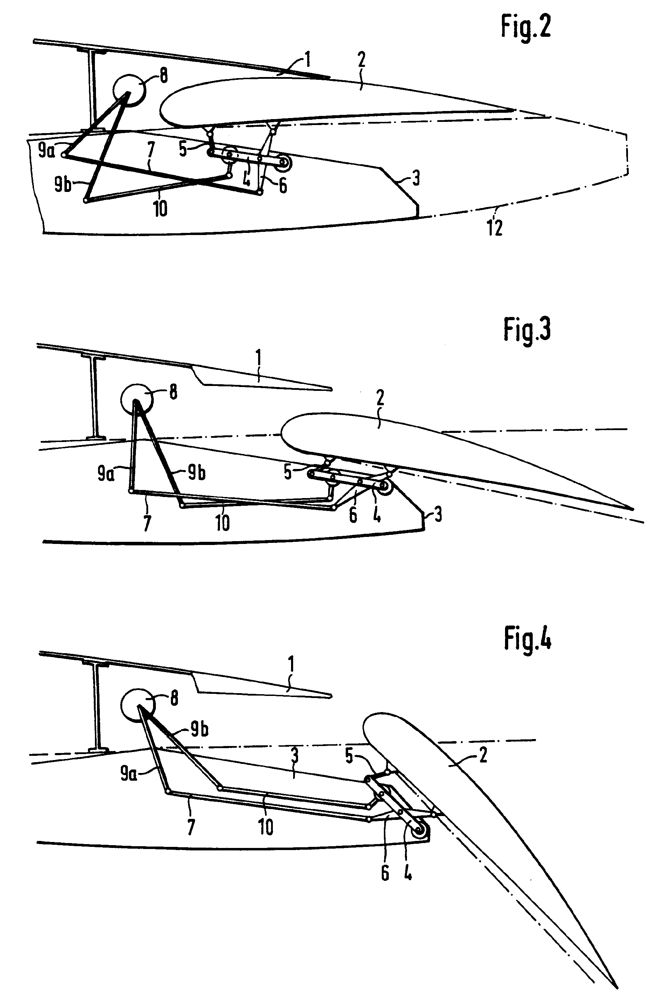

Die Darstellung in den Figuren 2 bis 4 zeigt die Hinterkanten klappe 2 nacheinander in drei unterschiedlichen Positionen,
- der volleingefahrenen Reiseflugkonfiguration (Fig. 2),
- der teilweise ausgefahrenen Start- oder Fowlerposition (Fig. 3) und
- der voll ausgefahrenen Landeposition.

Bei der in Fig. 2 dargestellten Reiseflugkonfiguration befindet sich die Klappe 2 vollständig innerhalb der Kontur des Tragflügels 1. Mit angedeutet ist in dieser Figur die Form der das Antriebs- und Führungssystem umgebenden Verkleidung 12, des sogenannten Fairings.

Durch Betätigen des Stellantriebes 8 in Ausfahrrichtung der Klappe 2, d.h. in der Zeichnung durch eine Drehung des Antriebshebels 9 entgegen dem Uhrzeigersinn, durchlaufen die beiden Anlenkpunkte der Steuerstange 7 und der Antriebsstange 10 an diesem Antriebshebel 9 unterschiedliche Wege. Dadurch wird bewirkt, daß der starr mit dem Wagen 4 verbundene Anlenkpunkt des Antriebshebels 10 am Wagen 4 dem Anlenkpunkt der Steuerstange 7 am zweiarmigen Hebel 6 in Ausfahrrichtung der Klappe 2 vorauseilt. Während somit der Wagen 4 auf dem geradlinigen Teil der Trag- und Führungsschiene 3 ausgefahren wird, wird zugleich die Klappe 2 in Richtung auf diese Führungsschiene 3 heruntergezogen. dies erlaubt es, die Bauhöhe der Trag- und Führungsschiene 3 sehr niedrig zu halten.

Man erkennt anhand der Darstellung in Fig. 3 außerdem, daß es möglich ist, durch eine Änderung der Länge des Lenkerelements 5 den Anstellwinkel der Klappe 2 in dieser Position zu beeinflussen. Eine ähnliche Wirkung läßt sich auch dadurch erzielen, daß der Abstand der Befestigungspunkte des Lenkerelements 5 und des Hebels 6 am Wagen 4 variiert wird.

Die in Fig. 4 gezeigte Endstellung der Klappe 2, die der Landeposition entspricht, wird dadurch erreicht, daß die Trag- und Führungsschiene 3 einen abgewinkelten Endbereich 3a aufweist, der eine stärkere Neigung als der erste Teil des Ausfahrweges des Wagens 4 aufweist und der Wagen 4 auf diesem Endbereich 3a entlangläuft.

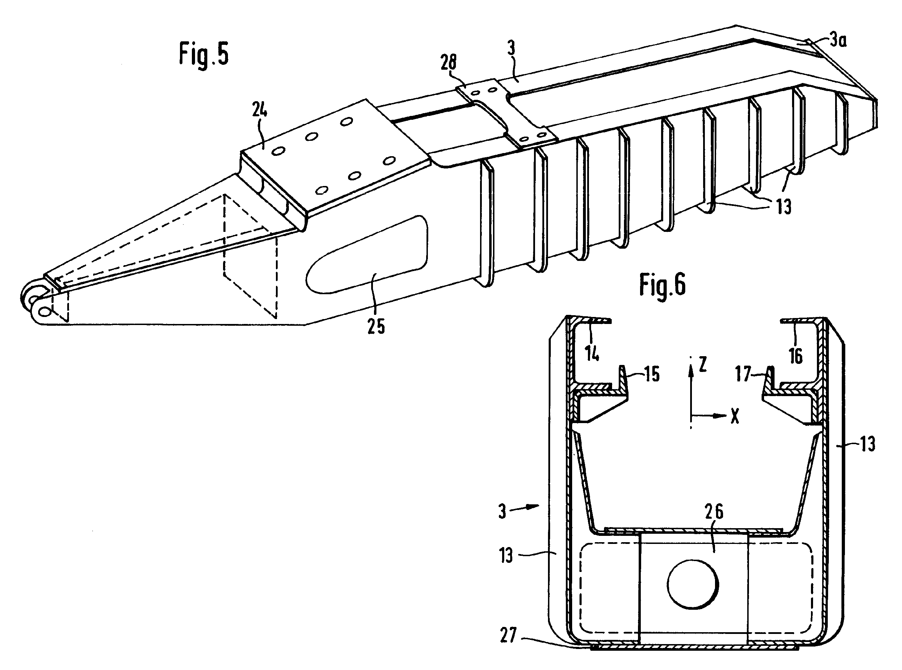

In den Figuren 5 bis 9 sind Einzelheiten des vorstehend in seinem Prinzipiellen Aufbau und in seiner Funktionsweise beschriebenen Systems dargestellt. Dabei zeigen die Figuren 5 und 6 zunächst den Aufbau der Trag- und Führungsschiene 3. Letztere besitzt einen etwa U-förmigen Querschnitt, bei dem die Seitenwände mit Verstärkungsrippen 13 versehen sind. Im Inneren des im vorliegenden Fall aus Aluminiumguß bestehenden Profils sind zu beiden Seiten je zwei in Längsrichtung der Schiene verlaufende sogenannte Lastschienen 14 und 15 bzw. 16 und 17 angeordnet. Sie dienen der Führung von am Wagen 4 angebrachten Rollen 18 bis 23 und nehmen Kräfte in zwei Richtung auf, die in Fig. 6 als X- und Z-Richtung bezeichnet sind.

Ergänzend sei angefügt, daß die Trag- und Führungsschiene 3 mittels einer Platte 24 an der Struktur des Tragflügels 1 befestigt ist und über ein durch einen Deckel 25 verschließbares Handloch verfügt, das der Montage der Trag- und Führungsschiene 3 an der Flügelstruktur, der Montage und Einstellung der Steuerstange 7 und der Antriebsstange 10 sowie zu Inspektions- und Wartungszwecken dient. Schließlich sind zur Gewährleistung der erforderlichen Steifigkeit der Trag- und Führungsschiene 3 in deren unteren Teil ein Torsionskasten 26 und ein Zugband 27 vorgesehen, weiterhin noch eine Traverse 28.

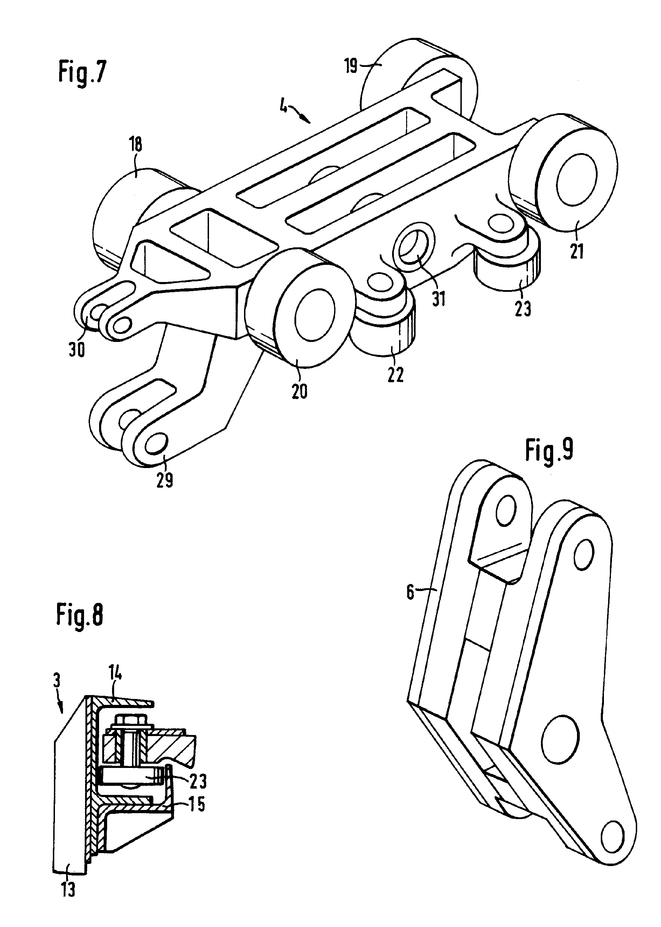

Wie die Konstruktion des Wagens 4 (Fig. 7) erkennen läßt, ist die hier beschriebene Anordnung so ausgelegt, daß sowohl der Wagen 4 als auch die das eigentliche Kinematiksystem bildenden Steuer- und Antriebsstange 7 und 10 innerhalb der Trag- und Führungsschiene 3 verlaufen. Die Antriebsstange 10 ist dabei an einem abgewinkelten gabelförmigen Ansatz 29 des Wagens 4 angelenkt, während der schräg darüber befindliche, ebenfalls gabelförmig zugespitzt verlaufende Endbereich 30 des Wagens 4 als Anlenkpunkt für das Lenkerelement 5 dient. Schließlich weist der Wagen 4 in seinem mittleren Bereich eine Bohrung 31 auf, in der der zweiarmige Hebel 6 drehbar gelagert ist.

Eine vergleichbare Ausfahrcharakteristik der Hinterkantenklappe 2 läßt sich auch erreichen, wenn das Lenkerelement 5 und der zweiarmige Hebel 6 in ihrer jeweiligen Einbauposition getauscht werden, wobei gleichzeitig auch die Länge und Winkelposition der beiden Antriebshebel 9a und 9b für die Steuerstange 7 sowie für die Antriebsstange entsprechend getauscht bzw. geändert werden.

In beiden Fällen läßt sich die angestrebte Ausfahrcharakteristik mit der gleichen geringen Bauhöhe der Trag- und Führungsschiene 3 und damit der gesamten Antriebs- und Führungsvorrichtung erzielen, so daß sich in beiden Fällen der gleiche positive Effekt auf die aerodynamischen Eigenschaften des Tragflügels 1 ergibt.

## Patentansprüche

1. Antriebs- und Führungsvorrichtung für eine an einem Flugzeugtragflugel (1) angeordnete Klappe (2), insbesondere für eine Hinterkantenklappe, bestehend aus einer kombinierten Trag- und Führunsschiene (3) für einen auf dieser verfahrbaren Wagen (4), an dem die Klappe (2) beweglich gehaltert ist, einem auf einen Antriebshebel (9) wirkenden Stellantrieb (8), dadurch gekennzeichnet, daß eine den Antriebshebel (9) mit dem Wagen (4) verbindende Antriebsstange (10) angeordnet ist und am Wagen (4) ein zweiarmiger Hebel (6) gelagert ist, dessen einer Arm über eine Steuerstange (7) mit dem Antriebshebel (9) verbunden ist und dessen zweiter Arm gelenkig mit der Klappe (2) verbunden ist und der zusammen mit einem die Klappe (2) mit dem Wagen (4) koppelnden Lenkerelement (5) ein Viergelenk bildet.

2. Antriebs- und Führungsvorrichtung nach Anspruch 1, dadurch gekennzeichnet, daß sich der Anlenkpunkt des zweiarmigen Hebels (6) an der Klappe (2) in Flugzeuglängsrichtung hinter dem Anlenkpunkt des Lenkerelementes (5) an der Klappe (2) befindet.

3. Antriebs- und Führungsvorrichtung nach Anspruch 2, dadurch gekennzeichnet, daß der Anlenkpunkt der Steuerstange (7) am Antriebshebel (9) gegenüber dem Anlenkpunkt der Antriebsstange (10) um einen Winkelbetrag in der Drehrichtung für die Einfahrbewegung der Klappe (2) versetzt angeordnet ist und einen geringen Abstand zur Drehachse (A) des Stellantriebes (8) aufweist.

4. Antriebs- und Führungsvorrichtung nach einem der Ansprüche 1 bis 3, dadurch gekennzeichnet, daß die Trag- und Führungsschiene (3) in ihrem rückwärtigen Teil einen Bereich (3a) stärkerer Neigung aufweist.

5. Antriebs- und Führungsvorrichtung nach einem der Ansprüche 1 bis 4, dadurch gekennzeichnet, daß sowohl der Wagen (4) als auch die Steuerstange (7) und die Antriebsstange (10) innerhalb der Trag- und Führungsschiene (3) angeordnet sind.

## Claims

1. Driving and guiding device for a flap (2) disposed on an aircraft wing (1), particularly for a trailing edge flap, consisting of a combined bearing and guide rail (3) for a carriage (4) which is movable thereon and on which the flap (2) is movably held, and a setting drive (8) which acts on a driving lever (9), characterised in that a driving rod (10) which connects the driving lever (9) to the carriage (4) is provided and there is mounted on the carriage (4) a two-armed lever (6), of which one arm is connected by way of a control rod (7) to the driving lever (9) and the second arm is flexibly connected to the flap (2), and which together with a steering element (5) which couples the flap (2) to the carriage (4) forms a four-way linkage.

2. Driving and guiding device according to Claim 1, characterised in that the point of articulation of the two-armed lever (6) on the flap (2) is located behind the point of articulation of the steering element (5) on the flap (2) in the longitudinal direction of the aircraft.

3. Driving and guiding device according to Claim 2, characterised in that the point of articulation of the control rod (7) on the driving lever (9) is offset with respect to the point of articulation of the driving rod (10) by an angular amount in the direction of rotation for moving the flap (2) in and is a small distance from the axis of rotation (A) of the setting drive (8).

4. Driving and guiding device according to one of Claims 1 to 3, characterised in that the bearing and guide rail (3) has a region (3a) of steeper inclination in its rear part.

5. Driving and guiding device according to one of Claims 1 to 4, characterised in that both the carriage (4) and also the control rod (7) and the driving rod (10) are disposed within the bearing and guide rail (3).

## Revendications

1. Dispositif d'entraînement et de guidage pour un volet (2) disposé sur une aile portante d'avion (1), en particulier pour un volet de bord de fuite, consistant en un rail combiné de support et de guidage (3) pour un chariot (4) pouvant se déplacer sur celui-ci, chariot sur lequel est fixé de façon mobile le volet (2) et un mécanisme de positionnement (8) agissant sur un levier d'entraînement (9), dispositif d'entraînement et de guidage caractérisé en ce qu'on dispose une tige d'entraînement (10) reliant le levier d'entraînement (9) au chariot (4) et on monte un levier à deux bras (6) sur le chariot (4), levier dont l'un des bras est relié par l'intermédiaire d'une tige de commande (7) au levier d'entraînement (9) et dont le deuxième bras est relié au volet (2) et qui forme en combinaison avec un élément d'articulation (5) accouplant le volet (2) au chariot (4) un quadrilatère articulé.

2. Dispositif d'entraînement et de guidage selon la revendication 1, caractérisé en ce que le point d'articulation du levier à deux bras (6) se trouve dans le sens longitudinal de l'avion derrière le point d'articulation de l'élément d'articulation (5) sur le volet (2).

3. Dispositif d'entraînement et de guidage selon la revendication 2, caractérisé en ce que le point d'articulation de la tige de commande (7) est disposé sur le levier d'entraînement (9) de façon décalée par rapport au point d'articulation de la tige d'entraînement (10) d'un certain angle dans le sens de rotation pour le mouvement d'introduction du volet (2) et présente une faible distance par rapport à l'axe de rotation (A) du mécanisme de positionnement (8).

4. Dispositif d'entraînement et de guidage selon l'une des revendications 1 à 3, dispositif caractérisé en ce que le rail de support et de guidage (3) présente dans sa partie postérieure une zone (3a) ayant une plus forte inclinaison.

5. Dispositif d'entraînement et de guidage selon l'une des revendications 1 à 4, caractérisé en ce qu'aussi bien le chariot (4) que la tige de commande (7) et la tige d'entraînement (10) sont disposés à l'intérieur du rail de support et de guidage (3).
